# EUROPEAN PATENT APPLICATION

(11) **EP 4 391 135 A1**
(43) Date of publication of application: **26.06.2024**
(21) Application number: 22857626.0
(22) Date of filing: 08.08.2022
(51) Int. Cl.: H01M 10/0567

(54) **NON-AQUEOUS ELECTROLYTE SOLUTION AND LITHIUM BATTERY**

(30) Priority: 16.08.2021 CN 202110935167
(71) Applicant: Zhangjiagang Guotai-Huarong New Chemical Materials Co., Ltd, Suzhou, Jiangsu 215600 (CN)
(72) Inventor: CHEN, Xiaoqin, Suzhou, Jiangsu 215600 (CN); GAN, Chaolun, Suzhou, Jiangsu 215600 (CN); SHI, Erbo, Suzhou, Jiangsu 215600 (CN); ZHANG, Li, Suzhou, Jiangsu 215600 (CN); LU, Xiaofeng, Suzhou, Jiangsu 215600 (CN)
(74) Representative: Bryers Intellectual Property Ltd
(86) International application number: PCT/CN2022/110794
(87) International publication number: WO 2023/020314

(57) **Abstract**

The present invention relates to a non-aqueous electrolyte solution and a lithium battery, and mainly solves the problems of easy decomposition at high temperature, poor cycle performance at high temperature and poor rate capability of a non-aqueous electrolyte. According to the present invention, the synergistic effect generated by the combined use of an additive A and an additive B better solves the problem. The non-aqueous electrolyte solution and the lithium battery using the non-aqueous electrolyte solution in the present application have excellent high temperature performance, cycle performance and rate capability.

## Description

### Technical Field of the Invention

The present disclosure relates to a non-aqueous electrolyte solution and a lithium battery.

### Background of the Invention

With the emergence of emerging consumption fields such as mobile phones, tablet computers, smart wearables, and ETC, lithium-ion batteries have shown great advantages due to their high energy density and long cycle life. The widespread application of lithium-ion batteries requires that lithium-ion batteries can adapt to different usage environments and maintain good performance in different harsh environments, so the use at higher temperatures and higher rates has become an important topic in the development of lithium-ion batteries.

Electrolyte, as the blood of lithium-ion batteries, has a significant impact on the performance of lithium-ion batteries, in order to improve the cycling performance of lithium-ion batteries, film forming additives are usually added to electrolytes, for example, electrolytes added with vinylene carbonate can form a good film on the surface of the battery electrode during battery formation, preventing further reaction and improving the cycling performance of the batteries, however, the film formed by adding vinylene carbonate is prone to decomposition at high temperatures, causing the batteries to fail to function at high temperatures. In order to improve the performance of the batteries at high temperatures, additives such as lithium bis(oxalate)borate are added to the electrolytes, lithium bis(oxalate)borate can form a good film at high temperatures, however, due to the large thickness of the film and the low conductivity of the film, the internal resistance of the battery is too high, which affects the battery capacity and other performance.

Based on this, how to make lithium-ion batteries balance high-temperature, cycling, and rate performance has become a research focus.

### Summary of the Invention

The technical solution to be solved by the present disclosure is to overcome the deficiencies in the prior art, and provide a non-aqueous electrolyte solution with good high-temperature, cycling and rate performance.

The present disclosure further provides a lithium battery with good high-temperature, cycling and rate performance.

To achieve the above purposes, a technical solution adopted by the present disclosure is as follows:
An aspect of the present disclosure provides a non-aqueous electrolyte solution comprising a lithium salt, an organic solvent, and an additive, the additive comprises an additive **A** and an additive **B**, the additive **A** has a chemical structure represented by Formula (1), Formula (1) is 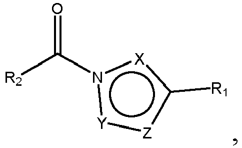 wherein, X, Y, and **Z** are independently selected from the group consisting of O, S, N, P, and 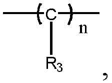 **n** is a positive integer, R₃ is selected from the group consisting of hydrogen, halogen, alkyl, cyano, haloalkyl, haloalkoxy, R₁ is selected from the group consisting of hydrogen, halogen, alkyl, haloalkyl, cyano, siloxane, alkoxy, and haloalkoxy, and R₂ is selected from the group consisting of alkenyl, haloalkenyl, alkenyloxy, haloalkenyloxy, phenylalkenyloxy, alkenylene, haloalkenylene, alkenyleneoxy, haloalkenyleneoxy, alkynyl, haloalkynyl, alkynyloxy, haloalkynyloxy, and cyano;
the additive **B** is selected from the group consisting of a first additive **B**, a second additive **B**, a third additive **B,** and combinations thereof,
the first additive **B** has a chemical structure represented by Formula (2), Formula (2) is 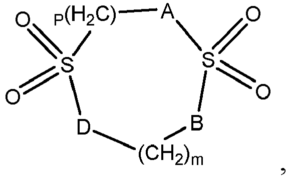 wherein, **m** and **p** are independently selected from 0, 1, and 2, and **A**, **B**, and **D** are independently a group composed of one or more of O, S, N, and P, or alkyl, respectively;
the second additive **B** has a chemical structure represented by Formula (3), Formula (3) is 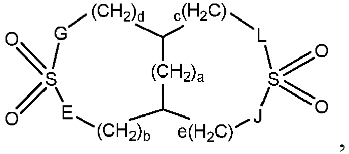 wherein, **a**, **b**, **c**, **d,** and e are independently selected from 0, 1, and 2, and **E**, **G**, **L**, and **J** are independently a group composed of one or more of O, S, N, and P, or alkyl, respectively;
the third additive **B** has a chemical structure represented by Formula (4), Formula (4) is 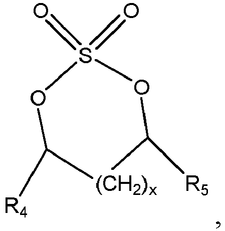 wherein, R₄ and R₅ are independently selected from the group consisting of hydrogen, alkyl, halogen, alkyloxy, and **x** is selected from 0, 1, and 2.

The halogen or halogen used in the halogenation in the present disclosure is selected from the group consisting of fluorine, chlorine, bromine, iodine, and combinations thereof, preferably fluorine.

Preferably, in Formula (1), **X**, **Y**, and **Z** are independently selected from N and 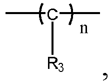 **n** is selected from 1, 2, 3, and 4, and R₃ is hydrogen or alkyl with 1 - 5 carbon atoms.

Further preferably, in Formula (1), **X** and **Y** are 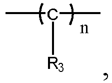 **Z** is selected from N and 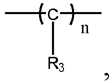 **n** is 1 or 2, and R₃ is hydrogen or alkyl with 1-3 carbon atoms.

Preferably, in Formula (1), R₁ is hydrogen or alkyl with 1-5 carbon atoms.

Further preferably, in Formula (1), R₁ is hydrogen or alkyl with 1 - 3 carbon atoms.

Preferably, in Formula (1), R₂ is selected from alkenyleneoxy with 1-5 carbon atoms, alkenyloxy with 1 - 5 carbon atoms, phenylalkenyloxy with 8 - 12 carbon atoms, alkynyl with 1 - 5 carbon atoms, and alkynyloxy with 1-5 carbon atoms.

According to some implementations, the additive **A** comprises one or more selected from the group consisting of 1H-imidazole-1-carboxylic acid-2-propenyl ester, allyl 3,5-dimethylpyrazole-1-carboxylate, 3-phenylprop-2-en-1-yl 1H-imidazole-1-carboxylate, allyl 2,3-dihydro-1H-pyrrole-1-carboxylate, allyl 1H-pyrrole-1-carboxylate, prop-2-yn-1-yl 1H-imidazole-1-carboxylate, and 1-imidazole-1-yl penta-4-yl-1-one.

Further preferably, the additive **A** comprises one or more selected from the group consisting of 1H-imidazole-1-carboxylic acid-2-propenyl ester, allyl 3,5-dimethylpyrazole-1-carboxylate, 3-phenylprop-2-en-1-yl 1H-imidazole-1-carboxylate, allyl 2,3-dihydro-1H-pyrrole-1-carboxylate, allyl 1H-pyrrole-1-carboxylate, and prop-2-yn-1-yl 1H-imidazole-1-carboxylate.

Preferably, the additive **A** accounts for 0.01 - 2 %, further 0.1 - 1.5%, more further 0.5 - 1% of the total mass of the non-aqueous electrolyte solution.

Preferably, in Formula (2), **A**, **B**, and **D** are independently O or alkyl with 1-3 carbon atoms.

Preferably, in Formula (3), **E**, **G**, **L** and **J** are independently O or alkyl with 1 - 3 carbon atoms.

Preferably, in Formula (4), R₄ and R₅ are independently hydrogen or alkyl with 1-5 carbon atoms.

According to some implementations, the additive **B** comprises one or more selected from the group consisting of propylene sulfate, ethylene sulfate, 4-methyl ethylene sulfate, 4-ethyl ethylene sulfate, 4-propyl ethylene sulfate, methylene methanedisulfonate, and 2,4,8,10-tetraoxa-3,9-dithiaspiro[5.5]undecane, 3,3,9,9-tetraoxide.

Further preferably, the additive **B** comprises one or more selected from the group consisting of ethylene sulfate, methylene methanedisulfonate, and 2,4,8,10-tetraoxa-3,9-dithiaspiro[5.5]undecane, 3,3,9,9-tetraoxide.

Preferably, the additive **B** accounts for 0.01 - 5 %, further 0.1 - 3%, more further 0.5 - 2%, even more further 1 - 1.5% of the total mass of the non-aqueous electrolyte solution.

According to some specific implementations, the additive further comprises succinonitrile and/or fluoroethylene carbonate.

Further preferably, succinonitrile accounts for 1 - 3 %, more further 1.5 - 2.5% of the total mass of the non-aqueous electrolyte solution.

Further preferably, fluoroethylene carbonate accounts for 3 - 5%, more further 3.5 - 4.5% of the total mass of the non-aqueous electrolyte solution.

Preferably, the organic solvent is a cyclic ester and/or a chain ester, the cyclic ester is selected from the group consisting of γ-butyrolactone, ethylene carbonate, propylene carbonate, fluoroethylene carbonate, and combinations thereof; the chain ester is selected from the group consisting of dimethyl carbonate, ethyl methyl carbonate, diethyl carbonate, methyl propyl carbonate, methyl propionate, ethyl propionate, propyl propionate, methyl acetate, ethyl acetate, propyl acetate, methyl butyrate, ethyl butyrate, propyl butyrate, methyl fluoropropionate, ethyl fluoropropionate, ethyl fluoroacetate, and combinations thereof.

Further preferably, the organic solvent is a mixture of a cyclic ester and a chain ester, wherein the cyclic ester is mixed with the chain ester in a volume ratio of 1: (1 - 2.5).

More further preferably, the cyclic ester is mixed with the chain ester in a volume ratio of 1: (1.5 - 2).

Preferably, the lithium salt is selected from the group consisting of lithium hexafluorophosphate, lithium tetrafluoroborate, lithium hexafluoroarsenate, anhydrous lithium perchlorate, lithium bis(trifluoromethanesulfonyl)imide, lithium difluorobis(oxalate)phosphate, lithium difluorophosphate, lithium trifluoromethanesulfonate, lithium difluorobisoxalate phosphate, lithium bis(oxalate)borate, lithium oxalyldifluoroborate, lithium bis(fluorosulfonyl)imide, and combinations thereof.

Preferably, the concentration of the lithium salt is 0.6 - 1.5 mol/L, further preferably 0.8 - 1.3 mol/L, more further preferably 1 - 1.2 mol/L.

Another aspect of the present disclosure provides a lithium battery comprising a cathode, an anode, and an electrolyte solution, wherein the electrolyte solution is the above-mentioned non-aqueous electrolyte solution.

Preferably, the cathode is made of lithium cobalt oxide anode material.

Further preferably, the anode is made of graphite material.

Preferably, the lithium battery is a high-voltage lithium batter with a voltage of 4.35 V or above.

Due to the utilization of the above technical solution, the present disclosure has the following advantages over the prior art:
By adding the additive **A** and the additive **B** to the non-aqueous electrolyte solution, the present disclosure solves the problems of the non-aqueous electrolyte solution being easy to decompose at high temperatures, poor cycling performance at high temperatures and poor rate performance, and the non-aqueous electrolyte solution and the lithium battery using the same in this application have excellent high-temperature performance, cycling performance and rate performance.

### Detailed Description of Exemplary Embodiments

Lithium batteries are widely used due to their advantages of fast response, bidirectional regulation, high energy, long life, and flexible configuration, and with the widespread application, higher requirements have been put forward for the performance of lithium batteries, which not only require them to be able to be used in a larger temperature range, but also to have good cycling and rate performance. Based on this, the inventor of this application has been able to propose the technical solution of the present disclosure through long-term research and extensive practice.

An embodiment of the present disclosure provides a non-aqueous electrolyte solution comprising a lithium salt, an organic solvent, and an additive.

### (1) Additives

The additive comprises an additive **A** and an additive **B**, the additive **A** has a chemical structure represented by Formula (1), Formula (1) is 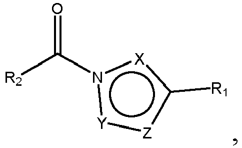 wherein, **X**, **Y**, and **Z** are independently selected from the group consisting of O, S, N, P, and 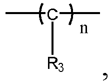 **n** is a positive integer, R₃ is selected from the group consisting of hydrogen, halogen, alkyl, cyano, haloalkyl, haloalkoxy, R₁ is selected from the group consisting of hydrogen, halogen, alkyl, haloalkyl, cyano, siloxane, alkoxy, and haloalkoxy, and R₂ is selected from the group consisting of alkenyl, haloalkenyl, alkenyloxy, haloalkenyloxy, phenylalkenyloxy, alkenylene, haloalkenylene, alkenyleneoxy, haloalkenyleneoxy, alkynyl, haloalkynyl, alkynyloxy, haloalkynyloxy, and cyano;
the additive **B** is selected from the group consisting of a first additive **B**, a second additive **B**, a third additive **B**, and combinations thereof,
the first additive **B** has a chemical structure represented by Formula (2), Formula (2) is 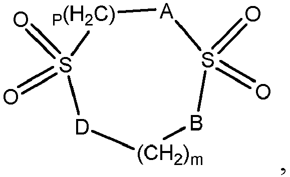 wherein, **m** and **p** are independently selected from 0, 1, and 2, and **A**, **B**, and **D** are independently a group composed of one or more of O, S, N, and P, or alkyl, respectively;
the second additive **B** has a chemical structure represented by Formula (3), Formula (3) is 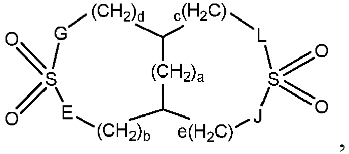 wherein, **a**, **b**, **c**, **d,** and e are independently selected from 0, 1, and 2, and **E**, **G**, **L**, and **J** are independently a group composed of one or more of O, S, N, and P, or alkyl, respectively;
the third additive **B** has a chemical structure represented by Formula (4), Formula (4) is 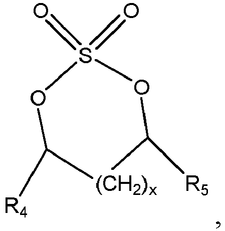 wherein, R₄ and R₅ are independently selected from the group consisting of hydrogen, alkyl, halogen, alkyloxy, and **x** is selected from 0, 1, and 2.

By adding additive **A** and additive **B** to the non-aqueous electrolyte solution, the present disclosure reduces the decomposition of the non-aqueous electrolyte solution at high temperatures through the synergistic effect between the additive **A** and the additive **B**, while increasing the cycling performance of the lithium battery at high temperatures, and making the direct-current impedance of the lithium battery basically unchanged.

Further, in Formula (1), **X, Y,** and **Z** are independently selected from N and 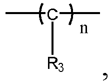 **n** is selected from 1, 2, 3, and 4, and R₃ is hydrogen or alkyl with 1 - 5 carbon atoms.

More further, in Formula (1), **X** and **Y** are 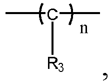 **Z** is selected from N and 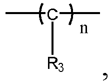 **n** is 1 or 2, and R₃ is hydrogen or alkyl with 1-3 carbon atoms.

Further, in Formula (1), R₁ is hydrogen or alkyl with 1-5 carbon atoms.

More further, in Formula (1), R₁ is hydrogen or alkyl with 1-3 carbon atoms.

Further, in Formula (1), R₂ is selected from alkenyleneoxy with 1 - 5 carbon atoms, alkenyloxy with 1 - 5 carbon atoms, phenylalkenyloxy with 8 - 12 carbon atoms, alkynyl with 1 - 5 carbon atoms, and alkynyloxy with 1-5 carbon atoms.

According to some implementations, the additive **A** comprises one or more selected from the group consisting of 1H-imidazole-1-carboxylic acid-2-propenyl ester ( 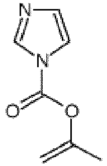 ), allyl 3,5-dimethylpyrazole-1-carboxylate ( 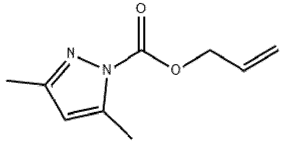 ), 3-phenylprop-2-en-1-yl 1H-imidazole-1-carboxylate ( 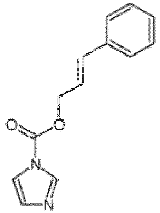 ), allyl 2,3-dihydro-1H-pyrrole-1-carboxylate ( 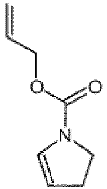 ), allyl 1H-pyrrole-1-carboxylate ( 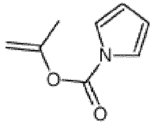 ), prop-2-yn-1-yl 1H-imidazole-1-carboxylate ( 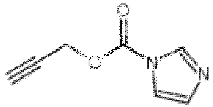 ), and 1-imidazole-1-yl penta-4-yl-1-one ( 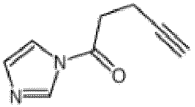 ).

Further, the additive **A** comprises one or more selected from the group consisting of 1H-imidazole-1-carboxylic acid-2-propenyl ester, allyl 3,5-dimethylpyrazole-1-carboxylate, 3-phenylprop-2-en-1-yl 1H-imidazole-1-carboxylate, allyl 2,3-dihydro-1H-pyrrole-1-carboxylate, allyl 1H-pyrrole-1-carboxylate, and prop-2-yn-1-yl 1H-imidazole-1-carboxylate.

Further, the additive **A** accounts for 0.01 - 2 %, further 0.1 - 1.5%, more further 0.5 - 1% of the total mass of the non-aqueous electrolyte solution. In the present disclosure, the additive **A** has a low additive amount and good effect.

Further, in Formula (2), **A**, **B**, and **D** are independently O or alkyl with 1 - 3 carbon atoms.

Further, in Formula (3), **E**, **G**, **L and J** are independently O or alkyl with 1-3 carbon atoms.

Further, in Formula (4), R₄ and R₅ are independently hydrogen or alkyl with 1 - 5 carbon atoms.

Specifically, the additive **B** comprises one or more selected from the group consisting of propylene sulfate, ethylene sulfate, 4-methyl ethylene sulfate, 4-ethyl ethylene sulfate, 4-propyl ethylene sulfate, methylene methanedisulfonate, and 2,4,8,10-tetraoxa-3,9-dithiaspiro[5.5]undecane, 3,3,9,9-tetraoxide.

Further, the additive **B** comprises one or more selected from the group consisting of ethylene sulfate, methylene methanedisulfonate, and 2,4,8,10-tetraoxa-3,9-dithiaspiro[5.5]undecane, 3,3,9,9-tetraoxide.

Further, the additive **B** accounts for 0.01 - 5 %, further 0.1 - 3%, more further 0.5 - 2%, even more further 1 - 1.5% of the total mass of the non-aqueous electrolyte solution.

In some embodiments of the present disclosure, the additive further comprises succinonitrile and/or fluoroethylene carbonate.

In some specific implementations, succinonitrile accounts for 2% of the total mass of the non-aqueous electrolyte solution.

In some specific implementations, fluoroethylene carbonate accounts for 4% of the total mass of the non-aqueous electrolyte solution.

### (2) Organic solvents

The organic solvent is a cyclic ester and/or a chain ester, the cyclic ester is selected from the group consisting of γ-butyrolactone, ethylene carbonate, propylene carbonate, fluoroethylene carbonate, and combinations thereof; the chain ester is selected from the group consisting of dimethyl carbonate, ethyl methyl carbonate, diethyl carbonate, methyl propyl carbonate, methyl propionate, ethyl propionate, propyl propionate, methyl acetate, ethyl acetate, propyl acetate, methyl butyrate, ethyl butyrate, propyl butyrate, methyl fluoropropionate, ethyl fluoropropionate, ethyl fluoroacetate, and combinations thereof. Of course, other organic solvents not listed in the field of lithium batteries are also applicable to the electrolyte solution of the present disclosure.

Further, the organic solvent is a mixture of a cyclic ester and a chain ester, wherein the cyclic ester is mixed with the chain ester in a volume ratio of 1: (1 - 2.5).

Wherein, when the additive further comprises succinonitrile and/or fluoroethylene carbonate, the cyclic ester is mixed with the chain ester in a volume ratio of 1: (1.5 - 1.8); when the additive does not comprise succinonitrile and/or fluoroethylene carbonate, the cyclic ester is mixed with the chain ester in a volume ratio of 1: (1.8 - 2.5).

The combination mode of the cyclic ester and the chain ester in the present disclosure may be to combine one or more cyclic esters in the cyclic esters with one or more chain esters in the chain esters, for example, it may be to combine any two cyclic esters in the cyclic esters with any one chain ester in the chain esters, or to combine any one cyclic ester in the cyclic esters with any two chain esters in the chain esters.

### (3) Lithium salts

The lithium salt is selected from the group consisting of lithium hexafluorophosphate, lithium tetrafluoroborate, lithium hexafluoroarsenate, anhydrous lithium perchlorate, lithium bis(trifluoromethanesulfonyl)imide, lithium difluorobis(oxalate)phosphate, lithium difluorophosphate, lithium trifluoromethanesulfonate, lithium difluorobisoxalate phosphate, lithium bis(oxalate)borate, lithium oxalyldifluoroborate, lithium bis(fluorosulfonyl)imide, and combinations thereof. In addition, the present disclosure can also use any lithium salt commonly used in electrolytes for lithium batteries.

In some specific embodiments, the lithium salt is lithium hexafluorophosphate.

Further, the concentration of the lithium salt is 0.6 - 1.5 mol/L.

In some specific embodiments, the concentration of the lithium salt is 1 mol/L.

An embodiment of the present disclosure further provides a lithium battery comprising a cathode, an anode, and an electrolyte solution, wherein the electrolyte solution is the above-mentioned non-aqueous electrolyte solution.

Further, the cathode is made of lithium cobalt oxide anode material.

Further, the anode is made of graphite material.

Further, the lithium battery is a high-voltage lithium battery with a voltage of 4.35 V or above.

The present disclosure is further described below combining with specific embodiments. However, the present disclosure is not limited to these embodiments. The implementation conditions employed by the embodiments may be further adjusted according to particular requirements, and undefined implementation conditions usually are conditions in conventional experiments. The technical features involved in the respective implementations of the present disclosure can be combined with each other if they do not conflict with each other.

Unless otherwise specified, **wt** refers to the mass percentage content.

In embodiments below, EC refers to ethylene carbonate, DMC refers to dimethyl carbonate, EMC refers to ethyl methyl carbonate, PC refers to propylene carbonate, and PP refers to propyl propionate.

### Embodiment 1

In an argon-filled glove box (H₂O content < 10 ppm), EC, DMC and EMC were mixed well in a volume ratio of 1:1:1, and 1 mol/L LiPF₆ was added to the mixed solution, then 0.5 wt% 1H-imidazole-1-carboxylic acid-2-propenyl ester, and 1 wt% methylene methanedisulfonate were respectively added to the mixed solution to give an electrolyte solution.

### Embodiment 2

In an argon-filled glove box (H₂O content < 10 ppm), EC, DMC and EMC were mixed well in a volume ratio of 1:1:1, and 1 mol/L LiPF₆ was added to the mixed solution, then 0.5 wt% allyl 3,5-dimethylpyrazole-1-carboxylate, and 1 wt% methylene methanedisulfonate were respectively added to the mixed solution to give an electrolyte solution.

### Embodiment 3

In an argon-filled glove box (H₂O content < 10 ppm), EC, DMC and EMC were mixed well in a volume ratio of 1:1:1, and 1 mol/L LiPF₆ was added to the mixed solution, then 0.5 wt% 3-phenylprop-2-en-1-yl 1H-imidazole-1-carboxylate, and 1 wt% methylene methanedisulfonate were respectively added to the mixed solution to give an electrolyte solution.

### Embodiment 4

In an argon-filled glove box (H₂O content < 10 ppm), EC, DMC and EMC were mixed well in a volume ratio of 1:1:1, and 1 mol/L LiPF₆ was added to the mixed solution, then 0.5 wt% allyl 2,3-dihydro-1H-pyrrole-1-carboxylate, and 1 wt% methylene methanedisulfonate were respectively added to the mixed solution to give an electrolyte solution.

### Embodiment 5

In an argon-filled glove box (H₂O content < 10 ppm), EC, DMC and EMC were mixed well in a volume ratio of 1:1:1, and 1 mol/L LiPF₆ was added to the mixed solution, then 0.5 wt% allyl 1H-pyrrole-1-carboxylate, and 1 wt% methylene methanedisulfonate were respectively added to the mixed solution to give an electrolyte solution.

### Embodiment 6

In an argon-filled glove box (H₂O content < 10 ppm), EC, DMC and EMC were mixed well in a volume ratio of 1:1:1, and 1 mol/L LiPF₆ was added to the mixed solution, then 0.5 wt% prop-2-yn-1-yl 1H-imidazole-1-carboxylate, and 1 wt% methylene methanedisulfonate were respectively added to the mixed solution to give an electrolyte solution.

The electrolyte solutions prepared in Embodiment 1 to Embodiment 6 above and Comparative Example 1 to Comparative Example 5 below were tested, in lithium cobalt oxide/graphite batteries with a voltage of 4.35 V, for the capacity retention rate after being stored at a high temperature of 85 °C for 4 hours (the capacity after charging a battery at 1 C to 4.35 V at 25 °C and under the condition of constant current/constant voltage (CC/CV), storing it in an oven at 85 °C for 4 hours, and then discharging it at 1 C to 3.0 V, divided by the capacity after charging it under the same condition and discharging it at 1 C to 3.0 V without storage), the capacity retention rate after 300 cycles at 45 °C (charging a battery at 1 C to 4.35 V at 45 °C and under the condition of constant current/constant voltage (CC/CV), and then discharging it at 1 C to 3.0 V to measure the initial capacity, then measuring the capacity after 300 cycles by cycling in the same way, the capacity retention rate after 300 cycles at 45 °C is the capacity after cycles divided by the initial capacity), the battery bulging rate after 300 cycles at 45 °C (the difference between the thicknesses of a battery after and before cycles divided by the thickness of the battery before cycles), and DCR at 50% SCO and 2 C for 10 s (i.e., in the 50% SCO state of charge of a battery, the ratio of the voltage difference between the voltages before and after discharging at a constant current of 2 C for 10 s to the current), the relevant experimental data are shown in Table 1.

### Embodiment 7

In an argon-filled glove box (H₂O content < 10 ppm), EC, PC and PP were mixed well in a volume ratio of 2:1:5, and 1 mol/L LiPF₆ was added to the mixed solution, then 2 wt% succinonitrile, 4 wt% fluoroethylene carbonate, 0.1 wt% prop-2-yn-1-yl 1H-imidazole-1-carboxylate, and 1 wt% methylene methanedisulfonate were respectively added to the mixed solution to give an electrolyte solution.

### Embodiment 8

In an argon-filled glove box (H₂O content < 10 ppm), EC, PC and PP were mixed well in a volume ratio of 2:1:5, and 1 mol/L LiPF₆ was added to the mixed solution, then 2 wt% succinonitrile, 4 wt% fluoroethylene carbonate, 0.5 wt% prop-2-yn-1-yl 1H-imidazole-1-carboxylate, and 1 wt% methylene methanedisulfonate were respectively added to the mixed solution to give an electrolyte solution.

### Embodiment 9

In an argon-filled glove box (H₂O content < 10 ppm), EC, PC and PP were mixed well in a volume ratio of 2:1:5, and 1 mol/L LiPF₆ was added to the mixed solution, then 1 wt% prop-2-yn-1-yl 1H-imidazole-1-carboxylate, and 1 wt% methylene methanedisulfonate were respectively added to the mixed solution to give an electrolyte solution.

The electrolyte solutions prepared in Embodiment 7 to Embodiment 9 above and Comparative Example 6 to Comparative Example 7 below were tested, in lithium cobalt oxide/graphite batteries with a voltage of 4.45 V, for the capacity retention rate after being stored at a high temperature of 85 °C for 4 hours (the capacity after charging a battery at 1 C to 4.45 V at 25 °C and under the condition of constant current/constant voltage (CC/CV), storing it in an oven at 85 °C for 4 hours, and then discharging it at 1 C to 3.0 V, divided by the capacity after charging it under the same condition and discharging it at 1 C to 3.0 V without storage), the capacity retention rate after 300 cycles at 45 °C (charging a battery at 1 C to 4.45V at 45 °C and under the condition of constant current/constant voltage (CC/CV), and then discharging it at 1 C to 3.0 V to measure the initial capacity, then measuring the capacity after 300 cycles by cycling in the same way, the capacity retention rate after 300 cycles at 45 °C is the capacity after cycles divided by the initial capacity), the battery bulging rate after 300 cycles at 45 °C (the difference between the thicknesses of a battery after and before cycles divided by the thickness of the battery before cycles), and DCR at 50% SCO and 2 C for 10 s (i.e., in the 50% SCO state of charge of a battery, the ratio of the voltage difference between the voltages before and after discharging at a constant current of 2 C for 10 s to the current), the relevant experimental data are shown in Table 1.

### Embodiment 10

In an argon-filled glove box (H₂O content < 10 ppm), EC, DMC and EMC were mixed well in a volume ratio of 1:1:1, and 1 mol/L LiPF₆ was added to the mixed solution, then 0.5 wt% 1H-imidazole-1-carboxylic acid-2-propenyl ester, and 1 wt% ethylene sulfate were respectively added to the mixed solution to give an electrolyte solution.

### Embodiment 11

In an argon-filled glove box (H₂O content < 10 ppm), EC, DMC and EMC were mixed well in a volume ratio of 1:1:1, and 1 mol/L LiPF₆ was added to the mixed solution, then 0.5 wt% allyl 3,5-dimethylpyrazole-1-carboxylate, and 1 wt% ethylene sulfate were respectively added to the mixed solution to give an electrolyte solution.

### Embodiment 12

In an argon-filled glove box (H₂O content < 10 ppm), EC, DMC and EMC were mixed well in a volume ratio of 1:1:1, and 1 mol/L LiPF₆ was added to the mixed solution, then 0.5 wt% 3-phenylprop-2-en-1-yl 1H-imidazole-1-carboxylate, and 1 wt% ethylene sulfate were respectively added to the mixed solution to give an electrolyte solution.

### Embodiment 13

In an argon-filled glove box (H₂O content < 10 ppm), EC, DMC and EMC were mixed well in a volume ratio of 1:1:1, and 1 mol/L LiPF₆ was added to the mixed solution, then 0.5 wt% allyl 2,3-dihydro-1H-pyrrole-1-carboxylate, and 1 wt% ethylene sulfate were respectively added to the mixed solution to give an electrolyte solution.

### Embodiment 14

In an argon-filled glove box (H₂O content < 10 ppm), EC, DMC and EMC were mixed well in a volume ratio of 1:1:1, and 1 mol/L LiPF₆ was added to the mixed solution, then 0.5 wt% allyl 1H-pyrrole-1-carboxylate, and 1 wt% ethylene sulfate were respectively added to the mixed solution to give an electrolyte solution.

### Embodiment 15

In an argon-filled glove box (H₂O content < 10 ppm), EC, DMC and EMC were mixed well in a volume ratio of 1:1:1, and 1 mol/L LiPF₆ was added to the mixed solution, then 0.5 wt% prop-2-yn-1-yl 1H-imidazole-1-carboxylate, and 1 wt% ethylene sulfate were respectively added to the mixed solution to give an electrolyte solution.

### Embodiment 16

In an argon-filled glove box (H₂O content < 10 ppm), EC, DMC and EMC were mixed well in a volume ratio of 1:1:1, and 1 mol/L LiPF₆ was added to the mixed solution, then 0.5 wt% prop-2-yn-1-yl 1H-imidazole-1-carboxylate, and 1 wt% 2,4,8,10-tetraoxa-3,9-dithiaspiro[5.5]undecane, 3,3,9,9-tetraoxide were respectively added to the mixed solution to give an electrolyte solution.

The electrolyte solutions prepared in Embodiment 10 to Embodiment 16 above and Comparative Example 1 to Comparative Example 8 below were tested, in lithium cobalt oxide/graphite batteries with a voltage of 4.35 V, for the capacity retention rate after being stored at a high temperature of 85 °C for 4 hours (the capacity after charging a battery at 1 C to 4.35 V at 25 °C and under the condition of constant current/constant voltage (CC/CV), storing it in an oven at 85 °C for 4 hours, and then discharging it at 1 C to 3.0 V, divided by the capacity after charging it under the same condition and discharging it at 1 C to 3.0 V without storage), the capacity retention rate after 300 cycles at 45 °C (charging a battery at 1 C to 4.35 V at 45 °C and under the condition of constant current/constant voltage (CC/CV), and then discharging it at 1 C to 3.0 V to measure the initial capacity, then measuring the capacity after 300 cycles by cycling in the same way, the capacity retention rate after 300 cycles at 45 °C is the capacity after cycles divided by the initial capacity), the battery bulging rate after 300 cycles at 45 °C (the difference between the thicknesses of a battery after and before cycles divided by the thickness of the battery before cycles), and DCR at 50% SCO and 2 C for 10 s (i.e., in the 50% SCO state of charge of a battery, the ratio of the voltage difference between the voltages before and after discharging at a constant current of 2 C for 10 s to the current), the relevant experimental data are shown in Table 1.

### Comparative example 1

In an argon-filled glove box (H₂O content < 10 ppm), EC, DMC and EMC were mixed well at a volume ratio of 1:1:1, and then 1 mol/L LiPF₆ was added to the mixed solution to give an electrolyte solution.

### Comparative example 2

In an argon-filled glove box (H₂O content < 10 ppm), EC, DMC and EMC were mixed well in a volume ratio of 1:1:1, and 1 mol/L LiPF₆ was added to the mixed solution, then 0.5 wt% 1H-imidazole-1-carboxylic acid-2-propenyl ester was added to the mixed solution to give an electrolyte solution.

### Comparative example 3

In an argon-filled glove box (H₂O content < 10 ppm), EC, DMC and EMC were mixed well in a volume ratio of 1:1:1, and 1 mol/L LiPF₆ was added to the mixed solution, then 1 wt% methylene methanedisulfonate was added to the mixed solution to give an electrolyte solution.

### Comparative example 4

In an argon-filled glove box (H₂O content < 10 ppm), EC, DMC and EMC were mixed well in a volume ratio of 1:1:1, and 1 mol/L LiPF₆ was added to the mixed solution, then 0.5 wt% prop-2-yn-1-yl 1H-imidazole-1-carboxylate was added to the mixed solution to give an electrolyte solution.

### Comparative example 5

In an argon-filled glove box (H₂O content < 10 ppm), EC, DMC and EMC were mixed well in a volume ratio of 1:1:1, and 1 mol/L LiPF₆ was added to the mixed solution, then 0.5 wt% prop-2-yn-1-yl 1H-imidazole-1-carboxylate, and 1 wt% 1,3-propane sultone were respectively added to the mixed solution to give an electrolyte solution.

### Comparative example 6

In an argon-filled glove box (H₂O content < 10 ppm), EC, PC and PP were mixed well in a volume ratio of 2:1:5, and 1 mol/L LiPF₆ was added to the mixed solution, then 2 wt% succinonitrile, and 4 wt% fluoroethylene carbonate were respectively added to the mixed solution to give an electrolyte solution.

### Comparative example 7

In an argon-filled glove box (H₂O content < 10 ppm), EC, PC and PP were mixed well in a volume ratio of 2:1:5, and 1 mol/L LiPF₆ was added to the mixed solution, then 2 wt% succinonitrile, 4 wt% fluoroethylene carbonate, 0.5 wt% prop-2-yn-1-yl 1H-imidazole-1-carboxylate, 1 wt% methylene methanedisulfonate, and 0.5 wt% prop-2-yn-1-yl 1H-imidazole-1-carboxylate were respectively added to the mixed solution to give an electrolyte solution.

### Comparative example 8

In an argon-filled glove box (H₂O content < 10 ppm), EC, DMC and EMC were mixed well in a volume ratio of 1:1:1, and 1 mol/L LiPF₆ was added to the mixed solution, then 1 wt% ethylene sulfate was added to the mixed solution to give an electrolyte solution.

**Table 1**

| | Capacity retention rate after 4 H of high-temperature storage at 85 °C (%) | Capacity retention rate after 300 cycles at 45 °C (%) | Battery bulging rate after 300 cycles at 45 °C (%) | DCR (mΩ) |
|---|---|---|---|---|
| Embodiment 1 | 93.4 | 96.0 | 3.5 | 25.3 |
| Embodiment 2 | 92.9 | 95.4 | 3.2 | 25.6 |
| Embodiment 3 | 92.4 | 95.6 | 3.3 | 26.0 |
| Embodiment 4 | 92.7 | 95.8 | 3.1 | 25.4 |
| Embodiment 5 | 93.0 | 95.9 | 3.1 | 25.3 |
| Embodiment 6 | 94.5 | 96.2 | 2.9 | 25.1 |
| Embodiment 7 | 90.3 | 92.3 | 5.6 | 42.5 |
| Embodiment 8 | 91.3 | 93.2 | 5.3 | 43.6 |
| Embodiment 9 | 91.2 | 92.9 | 5.2 | 44.0 |
| Embodiment 10 | 92.3 | 95.4 | 3.4 | 26.4 |
| Embodiment 11 | 93.0 | 94.6 | 3.5 | 26.5 |
| Embodiment 12 | 92.4 | 94.7 | 3.2 | 27.3 |
| Embodiment 13 | 92.5 | 94.5 | 3.3 | 26.8 |
| Embodiment 14 | 92.8 | 94.7 | 3.4 | 26.7 |
| Embodiment 15 | 93.6 | 95.8 | 3.1 | 26.1 |
| Embodiment 16 | 93.2 | 95.2 | 3.2 | 26.5 |
| Comparative example 1 | 89.3 | 92.3 | 4.2 | 22.4 |
| Comparative example 2 | 89.5 | 93.5 | 4.0 | 35.0 |
| Comparative example 3 | 89.8 | 92.7 | 4.1 | 25.3 |
| Comparative example 4 | 92.7 | 94.5 | 3.9 | 32.4 |
| Comparative example 5 | 92.9 | 94.8 | 3.5 | 33.1 |
| Comparative example 6 | 88.0 | 88.3 | 6.2 | 40.2 |
| Comparative example 7 | 89.4 | 90.5 | 5.9 | 48.1 |
| Comparative example 8 | 90.4 | 93.1 | 4.0 | 25.3 |

The above detailed describes the present disclosure, and is intended to make those skilled in the art being able to understand the present disclosure and thereby implement it, and should not be concluded to limit the protective scope of this disclosure. Any equivalent variations or modifications according to the spirit of the present disclosure should be covered by the protective scope of the present disclosure.

## Claims

1. A non-aqueous electrolyte solution comprising a lithium salt, an organic solvent, and an additive, **characterized in that**, the additive comprises an additive **A** and an additive **B**, the additive **A** has a chemical structure represented by Formula (1), Formula (1) is 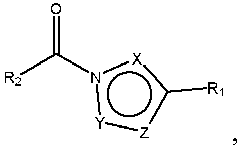 wherein, **X**, **Y**, and **Z** are independently selected from the group consisting of O, S, N, P, and 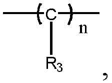 **n** is a positive integer, R₃ is selected from the group consisting of hydrogen, halogen, alkyl, cyano, haloalkyl, haloalkoxy, R₁ is selected from the group consisting of hydrogen, halogen, alkyl, haloalkyl, cyano, siloxane, alkoxy, and haloalkoxy, and R₂ is selected from the group consisting of alkenyl, haloalkenyl, alkenyloxy, haloalkenyloxy, phenylalkenyloxy, alkenylene, haloalkenylene, alkenyleneoxy, haloalkenyleneoxy, alkynyl, haloalkynyl, alkynyloxy, haloalkynyloxy, and cyano;
the additive **B** is selected from the group consisting of a first additive **B**, a second additive **B**, a third additive **B**, and combinations thereof,
the first additive **B** has a chemical structure represented by Formula (2), Formula (2) is 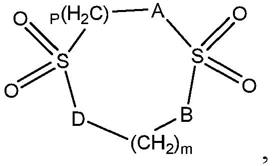 wherein, **m** and **p** are independently selected from 0, 1, and 2, and **A**, **B**, and **D** are independently a group composed of one or more of O, S, N, and P, or alkyl, respectively;
the second additive **B** has a chemical structure represented by Formula (3), Formula (3) is 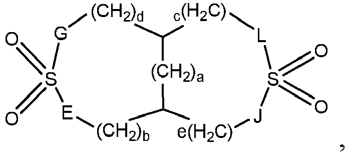 wherein, **a**, **b**, **c**, **d** and e are independently selected from 0, 1, and 2, and **E**, **G**, **L**, and **J** are independently a group composed of one or more of O, S, N, and P, or alkyl, respectively;
the third additive **B** has a chemical structure represented by Formula (4), Formula (4) is 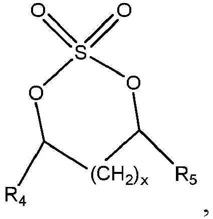 wherein, R₄ and R₅ are independently selected from the group consisting of hydrogen, alkyl, halogen, alkyloxy, and x is selected from 0, 1, and 2.

2. The non-aqueous electrolyte solution according to claim 1, **characterized in that**, in Formula (1), **X**, **Y**, and **Z** are independently selected from N and 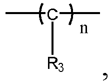 **n** is selected from 1, 2, 3, and 4, and R₃ is hydrogen or alkyl with 1 - 5 carbon atoms.

3. The non-aqueous electrolyte solution according to claim 2, **characterized in that**, in Formula (1), R₁ is hydrogen or alkyl with 1-5 carbon atoms.

4. The non-aqueous electrolyte solution according to claim 2, **characterized in that**, in Formula (1), R₂ is selected from alkenyleneoxy with 1-5 carbon atoms, alkenyloxy with 1 - 5 carbon atoms, phenylalkenyloxy with 8 - 12 carbon atoms, alkynyl with 1 - 5 carbon atoms, and alkynyloxy with 1-5 carbon atoms.

5. The non-aqueous electrolyte solution according to claim 1, **characterized in that**, the additive **A** comprises one or more selected from the group consisting of 1H-imidazole-1-carboxylic acid-2-propenyl ester, allyl 3,5-dimethylpyrazole-1-carboxylate, 3-phenylprop-2-en-1-yl 1H-imidazole-1-carboxylate, allyl 2,3-dihydro-1H-pyrrole-1-carboxylate, allyl 1H-pyrrole-1-carboxylate, prop-2-yn-1-yl 1H-imidazole-1-carboxylate, and 1-imidazole-1-yl penta-4-yl-1-one.

6. The non-aqueous electrolyte solution according to claim 1, **characterized in that**, in Formula (2), **A**, **B**, and **D** are independently O or alkyl with 1-3 carbon atoms.

7. The non-aqueous electrolyte solution according to claim 1, **characterized in that**, in Formula (3), **E**, **G**, L and **J** are independently O or alkyl with 1 - 3 carbon atoms.

8. The non-aqueous electrolyte solution according to claim 1, **characterized in that**, in Formula (4), R₄ and R₅ are independently hydrogen or alkyl with 1 - 5 carbon atoms.

9. The non-aqueous electrolyte solution according to claim 1, **characterized in that**, the additive **B** comprises one or more selected from the group consisting of propylene sulfate, ethylene sulfate, 4-methyl ethylene sulfate, 4-ethyl ethylene sulfate, 4-propyl ethylene sulfate, methylene methanedisulfonate, and 2,4,8,10-tetraoxa-3,9-dithiaspiro[5.5]undecane, 3,3,9,9-tetraoxide.

10. The non-aqueous electrolyte solution according to claim 1, **characterized in that**, the additive **A** accounts for 0.01 - 2 % of the total mass of the non-aqueous electrolyte solution; the additive **B** accounts for 0.01 - 5 % of the total mass of the non-aqueous electrolyte solution.

11. The non-aqueous electrolyte solution according to claim 1, **characterized in that**, the additive further comprises succinonitrile and/or fluoroethylene carbonate.

12. The non-aqueous electrolyte solution according to claim 1, **characterized in that**, the organic solvent is a cyclic ester and/or a chain ester, the cyclic ester is selected from the group consisting of γ-butyrolactone, ethylene carbonate, propylene carbonate, fluoroethylene carbonate, and combinations thereof; the chain ester is selected from the group consisting of dimethyl carbonate, ethyl methyl carbonate, diethyl carbonate, methyl propyl carbonate, methyl propionate, ethyl propionate, propyl propionate, methyl acetate, ethyl acetate, propyl acetate, methyl butyrate, ethyl butyrate, propyl butyrate, methyl fluoropropionate, ethyl fluoropropionate, ethyl fluoroacetate, and combinations thereof.

13. The non-aqueous electrolyte solution according to claim 1, **characterized in that**, the lithium salt is selected from the group consisting of lithium hexafluorophosphate, lithium tetrafluoroborate, lithium hexafluoroarsenate, anhydrous lithium perchlorate, lithium bis(trifluoromethanesulfonyl)imide, lithium difluorobis(oxalate)phosphate, lithium difluorophosphate, lithium trifluoromethanesulfonate, lithium difluorobisoxalate phosphate, lithium bis(oxalate)borate, lithium oxalyldifluoroborate, lithium bis(fluorosulfonyl)imide, and combinations thereof.

14. The non-aqueous electrolyte solution according to claim 1, **characterized in that**, the concentration of the lithium salt is 0.6 - 1.5 mol/L.

15. A lithium battery comprising a cathode, an anode, and an electrolyte solution, **characterized in that**, the electrolyte solution is the non-aqueous electrolyte solution according to any one of claims 1 to 14.
